(19) **Europäisches Patentamt / European Patent Office / Office européen des brevets**

(11) **EP 3 828 755 B1**

(12) **EUROPEAN PATENT SPECIFICATION**

(45) Date of publication and mention of the grant of the patent:
**19.07.2023 Bulletin 2023/29**

(51) International Patent Classification (IPC):
**G06V 20/58** (2022.01)    **G06V 40/18** (2022.01)

(52) Cooperative Patent Classification (CPC):
**G06V 20/597; G06V 20/58;** G06V 40/18

(21) Application number: **19212437.8**

(22) Date of filing: **29.11.2019**

(54) **IMPROVED ESTIMATION OF DRIVER ATTENTION**

VERBESSERTE SCHÄTZUNG DER FAHRERAUFMERKSAMKEIT

ESTIMATION AMÉLIORÉE DE L'ATTENTION D'UN CONDUCTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.06.2021 Bulletin 2021/22**

(73) Proprietor: **Veoneer Sweden AB**
**447 37 Vårgårda (SE)**

(72) Inventor: **Pålsson, Carl-Johan**
**447 37 Vårgårda (SE)**

(74) Representative: **Westpatent AB**
**Almekärrsvägen 11**
**443 39 Lerum (SE)**

(56) References cited:
- L. FLETCHER ET AL: "Driver Inattention Detection based on Eye Gaze--Road Event Correlation", INTERNATIONAL JOURNAL OF ROBOTICS RESEARCH., vol. 28, no. 6, 20 May 2009 (2009-05-20), pages 774-801, XP055281585, US ISSN: 0278-3649, DOI: 10.1177/0278364908099459
- LANGNER TOBIAS ET AL: "Traffic awareness driver assistance based on stereovision, eye-tracking, and head-up display", 2016 IEEE INTERNATIONAL CONFERENCE ON ROBOTICS AND AUTOMATION (ICRA), IEEE, 16 May 2016 (2016-05-16), pages 3167-3173, XP032908555, DOI: 10.1109/ICRA.2016.7487485 [retrieved on 2016-06-08]
- SCHWEHR JULIAN ET AL: "Driver's gaze prediction in dynamic automotive scenes", 2017 IEEE 20TH INTERNATIONAL CONFERENCE ON INTELLIGENT TRANSPORTATION SYSTEMS (ITSC), IEEE, 16 October 2017 (2017-10-16), pages 1-8, XP033330259, DOI: 10.1109/ITSC.2017.8317586 [retrieved on 2018-03-14]
- TAWARI ASHISH ET AL: "Attention estimation by simultaneous analysis of viewer and view", 17TH INTERNATIONAL IEEE CONFERENCE ON INTELLIGENT TRANSPORTATION SYSTEMS (ITSC), IEEE, 8 October 2014 (2014-10-08), pages 1381-1387, XP032685892, DOI: 10.1109/ITSC.2014.6957880 [retrieved on 2014-11-14]

**Description**

The present disclosure relates to a vehicle detection system comprising a control unit, an environment detection system that is adapted to detect objects outside a vehicle, and a driver attentiveness detection system that is adapted to detect eye gaze direction of a driver.

A vehicle environment detection system, for example comprising camera systems, radio detection and ranging (radar) systems and light detection and ranging (Lidar) systems, can be mounted on a vehicle in order to detect objects in a vicinity of the vehicle. The obtained detections can be used to implement functions such as speed control and collision prevention, ego motion estimation and scene understanding. For this purpose, it is desired to represent tracked objects in an efficient an accurate manner, and to track the represented objects.

It is, however, desired to avoid unnecessary automated actions, for example when a detected object has been observed by the driver and the driver can take a suitable action without any automated assistance. It is also desired to enhance the triggering of automated actions regarding a detected object that has not been observed by the driver.

The document "Driver Inattention Detection based on Eye GazeRoad Event Correlation" (L. FLETCHER ET AL) discloses estimating a driver's observations and detecting driver inattentiveness. In particular it is disclosed that it is possible to detect missed road events and warn the driver appropriately by determining whether a road event has been observed by the driver or not.

The document "Traffic awareness driver assistance based on stereovision, eye-tracking, and head-up display" (LANGNER TOBIAS ET AL) discloses a system which constantly monitors the level of attention of a driver in traffic, and if the driver is inattentive and fails to recognize a threat, the system produces a warning. The system consists of computer vision detection, eye tracking, and warning means.

There is thus a need for a vehicle detection system and a corresponding method for estimating when and to which extent a detected object has been observed by the driver.

Said object is achieved by means of a vehicle detection system according to claim 1 comprising a control unit, an environment detection system that is adapted to detect objects outside a vehicle, and a driver attentiveness detection system that is adapted to detect eye gaze direction of a driver. The control unit is adapted to acquire data regarding detected objects from the environment detection system, and to acquire eye gaze direction data from the driver attentiveness detection system. The eye gaze direction data comprises an eye gaze direction vector. The control unit is adapted to estimate to which extent a detected object is occupying a driver's field of view by means of a combination of the acquired data.

In this way, unnecessary automated actions are avoided, and at the same time triggering of automated actions regarding a detected object that has not been observed by the driver can be enhanced.

The control unit is adapted to define the driver's field of view by means of the acquired eye gaze direction data, and to represent the field of view with at least one cone having a corresponding base.

In this way, an efficient mathematical representation of the driver's field of view is provided.

The base comprises a pattern of sample points, where the sample points represent the effective field of view.

In this way, an efficient mathematical representation of the effective driver's field of view is provided.

The control unit is adapted to estimate to which extent a detected object is occupying a driver's field of view by determining how many sample points that coincide with the detected object.

In this way, it can be estimated to which extent a detected object is occupying a driver's field of view in an efficient and reliable manner.

There are at least two field of views with a corresponding base and base area. Each base area comprises a corresponding sub-pattern of sample points, where at least two sub-patterns of sample points have mutually different pattern density.

In this way the field of view can be divided in different part with different resolution which for example is beneficial when there are detected objects at different distances from the vehicle detection system comprising a control unit, an environment detection system.

According to some aspects, each sample point is related to a sample point vector that runs in relation to the eye gaze direction vector.

In this way, starting data that enable an efficient forming of the at least one cone are provided.

According to some aspects, each field of view is represented by a cone having a circular base area with a center. A pattern or sub-pattern of sample points within each base area is formed according to

$$r_{n,S} = \sqrt{r_{i,S}^2 + \frac{n}{N_S}\left(r_{o,S}^2 - r_{i,S}^2\right)}$$

$$\theta_{n,S} = 2\pi\varphi n$$

$$x_{n,S} = r_{n,S}\cos(\theta_{n,S})$$

$$y_{n,S} = r_{n,S}\sin(\theta_{n,S}),$$

Here, n is the number of the present sample point, where n runs from 1 to $N_s$ that is the number of sample points within the base area S, $r_{n,S}$ is the radius from the center for sample point n, within the base area S, $r_{i,S}$ is the inner radius from the center for the base area S, $r_{o,S}$ is the outer radius from the center for the base area S, $N_s$ is the number of sample points within the base area S, $x_{n,S}$ is an x-coordinate within the base area S for sample point n, $y_{n,S}$ is a y-coordinate within the base area S for sample point n, and $\theta_{n,S}$ is an angle between the radius to sample point n and the radius to the previous sample point n-1. Furthermore,

$$\varphi = \left(\frac{\sqrt{5}+1}{2} \pm W\right) \pm q$$

where W is an integer including zero and -0,001<q<0,001.

In this way, an efficient and uniformly distributed pattern that provides a reliable representation of the effective driver's field of view is provided.

There are also disclosed herein a method of the invention according to claim 5 and a vehicle of the invention according to claim 4 associated with the above-mentioned advantages.

BRIEF DESCRIPTION OF THE DRAWINGS

The present disclosure will now be described more in detail with reference to the appended drawings, where:

Figure 1      shows a schematic top view of a vehicle;

Figure 2      shows a schematic cut-open side view of a vehicle;

Figure 3      shows a first schematic illustration of a base for a field of view cone;

Figure 4      shows a second schematic illustration of a base for a field of view cone;

Figure 5      shows a third schematic illustration of a base for a field of view cone;

Figure 6      shows a schematic illustration of a field of view cones for different detection ranges;

Figure 7      shows a schematic illustration of a field of view cone;

Figure 8      shows a schematic illustration of a vehicle detection system according to the present disclosure;

Figure 9      shows a fourth schematic illustration of a base for a field of view cone, the base having a general number of base areas;

Figure 10     shows an example computer program product; and

Figure 11     shows a flowchart for a method according to the present disclosure.

DETAILED DESCRIPTION

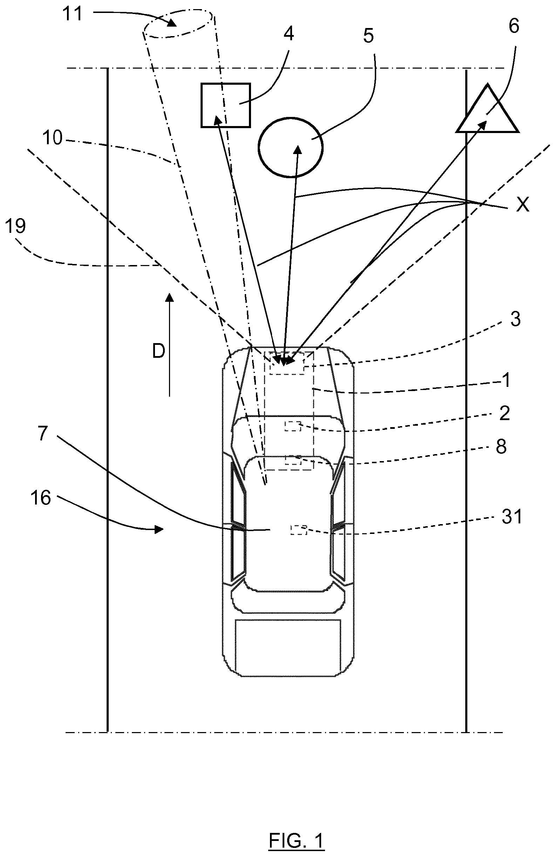

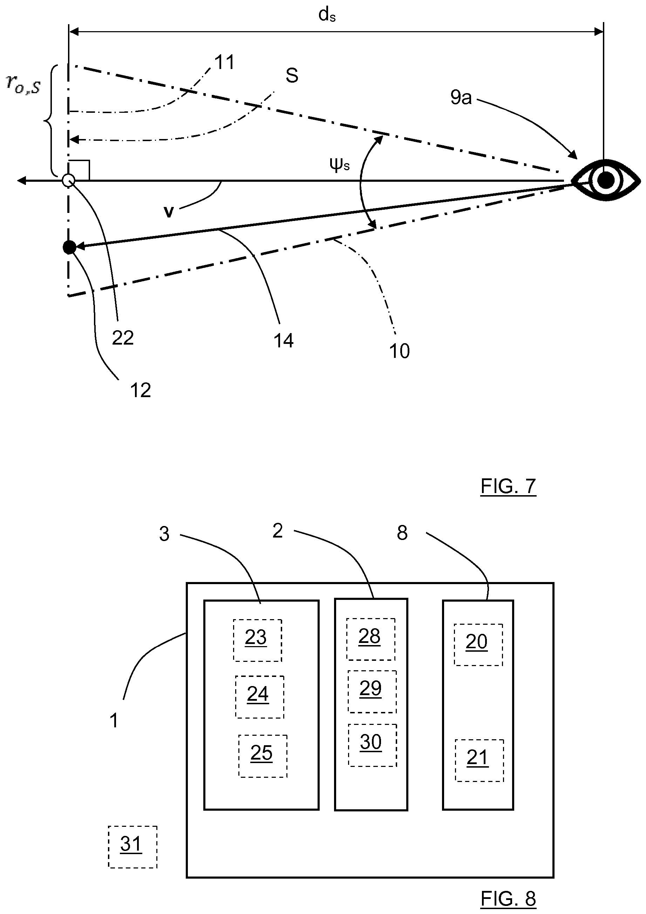

Figure 1 schematically shows a top view of a vehicle 7 that travels in a direction D on a road 16. The vehicle 7 comprises a vehicle detection system 1 that in turn comprises a control unit 2. The vehicle detection system 1 further comprises an environment detection system 3 that is adapted to detect objects 4, 5, 6 outside the vehicle 7. According to some aspects, with reference also to Figure 8, the environment detection system 3 comprises a first camera detector device 23. According to some further aspects, the environment detection system 3 also comprises at least one of a radar detector device 24 and a Lidar detector device 25.

The devices comprised in the environment detection system 3 are well-known and provide data regarding detected objects 4, 5, 6, and in the case of two or more detector devices, the output of these detector devices can be combined. or fused such that a more detailed representation of the environment outside the vehicle 7 can be acquired for a certain sensor field of view 19.

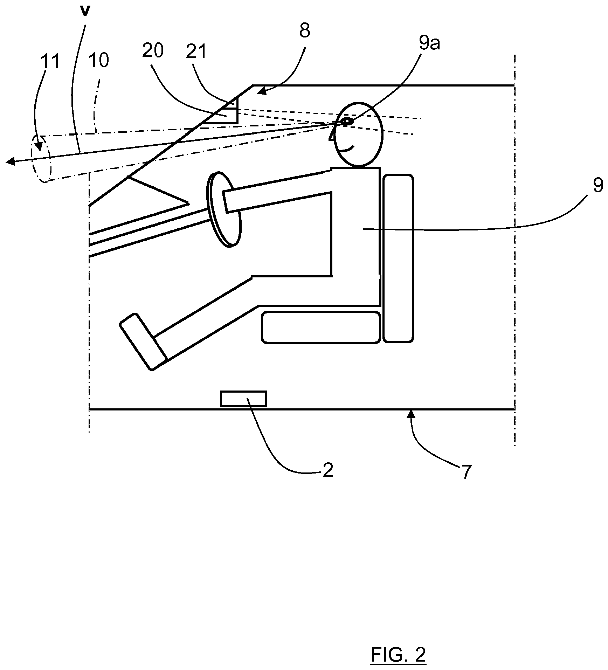

With reference also to Figure 2 that schematically shows a cut-open part of the vehicle 7, the vehicle detection system 1 further comprises a driver attentiveness detection system 8 that is adapted to detect eye gaze direction of a driver's eye 9a. For this purpose, according to some aspects, the driver attentiveness detection system 8 comprises a second camera detector device 20 and an image control unit 21. Such a driver attentiveness detection system 8 is for example described more in detail in SE 1530037.

The control unit 2 is adapted to acquire data regarding detected objects 4, 5, 6 from the environment detection system 3, and to acquire eye gaze direction data from the driver attentiveness detection system 8, where the eye gaze direction data comprises an eye gaze direction vector v that according to some aspects is a normalized vector. According to some aspects, the eye gaze direction data also comprises origin data for the eye gaze direction vector v, for example position of a driver's eyes 9a.

According to the present disclosure, the control unit 2 is adapted to estimate to which extent a detected object 4 is occupying a driver's field of view 10 by means of a combination of the acquired data.

According to some aspects, the control unit 2 is adapted to define a driver's field of view 10 by means of the acquired eye gaze direction data, and to represent the field of view 10 with at least one cone 10 having a corresponding base 11 having a center 15. This is also illustrated in Figure 7, where the eye gaze direction vector v is shown, directed from the driver's eye 9a towards an imaginary gaze target 22, and where the cone 10 is formed uniformly around the gaze direction vector v such that imaginary target 22 coincides with the center 15.

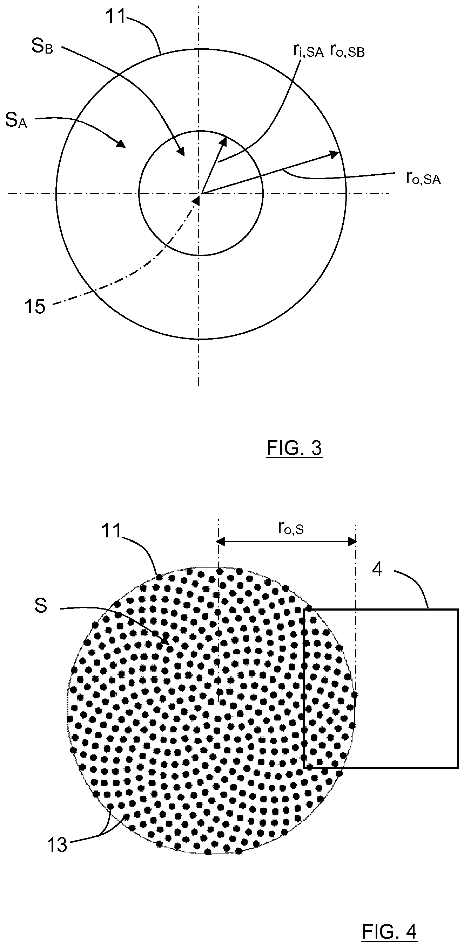

According to some aspects, as shown in Figure 4, the base 11 has a base area S that comprises a pattern of sample points 13 indicated with dots, where the sample points 13 represent the effective field of view. With reference also to Figure 7, according to some aspects, each sample point 12 is related to a sample point vector 14 that runs in relation to the eye gaze direction vector v. According to some aspects, each sample point vector 14 extends from the driver's eye 9a through a corresponding sample point 12. That means that as the driver's eye gaze direction is detected to change, the eye gaze direction vector v is updated and all sample points 13, 12 with corresponding sample point vectors 14 are updated accordingly.

In this manner, by determining how many sample points that occupy a detected object 4, it can be estimated to which extent a detected object 4 is occupying a driver's field of view 10. In other words, the control unit 2 is adapted to estimate to which extent a detected object 4 is occupying a driver's field of view 10 by determining how many sample points 13 that coincide with the detected object 4.

To determine if a detected object 4 is in the field of view 10, the vehicle detection system 1 is adapted to sample for objects inside the corresponding cone 10 by means of ray-casting which means that a ray runs along each sample point vector 14 and returns the first detected object in the path, if any. If, and how much, a detected object 4 occupies the driver's field of view 10 can be approximated by the fraction of samples that detected the object. Using the time and space a detected object 4 has occupied of the driver's field of view 10, the vehicle detection system 1 is adapted to estimate if the driver 9 has seen the detected object 4 or not. Depending on the outcome of this estimation, it is determined if the driver 9 can take a suitable action without any automated assistance or not. If not, one or more systems 31 for safety and/or assisted driving as shown in Figure 1 is activated accordingly. According to some aspects, the level of activation of said system 31 for safety and/or assisted driving can be set in accordance with the outcome of this estimation, for example certain threshold settings.

It should be noted that due to sensor inaccuracies and reasons of human perception it cannot be absolutely known if the driver 9 actually has seen the detected object 4, but the vehicle detection system 1 is adapted to estimate if a detected object has occupied the driver's field of view, both to which extent and for how long time. From this, a certain likelihood that the driver 9 actually has seen the detected object 4 can be determined and used for determining if the driver 9 can take a suitable action without any automated assistance or not.

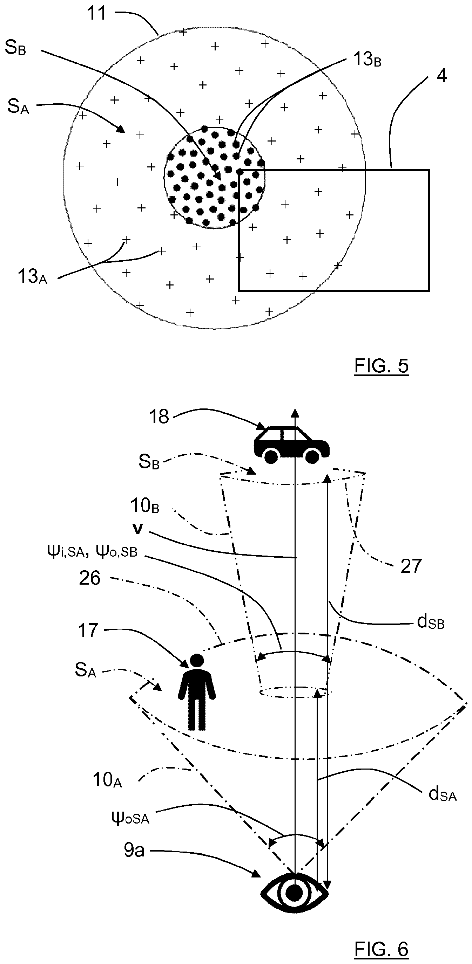

With reference to Figure 5 and Figure 6, there is a first field of view $10_A$ with a first base 26 and first base area $S_A$ at a first distance $d_A$ of the detection range, and a second field of view $10_B$ with a second base 27 and second base area $S_B$ at a second distance $d_A$ of the detection range. The first field of view $10_A$ is intended for relatively close objects 17, and the second field of view $10_B$ is intended for relatively remote objects 18. Each field of view $10_A$, $10_B$ is represented by a corresponding cone $10_A$, $10_B$ formed uniformly around the gaze direction vector **v.**

The first base area $S_A$ comprises a first pattern of sample points $13_A$ indicated with crosses and the second base area $S_B$ comprises a second pattern of sample points $13_B$ indicated with dots, where the second pattern of sample points $13_B$ is denser than the first pattern of sample points $13_A$ in order to maintain a certain resolution due to the fact that the second base 27 and the second base area $S_B$ are more remote than the first base 26 and first base area $S_A$.

According to some aspects, as an example, the first base 26 and first base area $S_A$ are positioned at the first distance $d_A$ of the detection range of about 10 meters from the driver 9, and the second base 27 and the second base area $S_B$ are positioned at the second distance $d_B$ of the detection range of about 100 meters from the driver's eye 9a.

As evident from Figure 4 and Figure 5, this means that the quality of the estimation is dependent on how the pattern of sample points 13; $13_A$, $13_B$ is formed. Therefore, in the following, it will be described how the pattern of sample points 13; $13_A$, $13_B$ can be formed.

With reference to Figure 3, Figure 4, Figure 5 and Figure 7, a field of view 10; $10_A$, $10_B$ is represented by a cone having a circular base area S; $S_A$, $S_B$ with a center 15. A general pattern or sub-pattern of sample points 13 within a general base area S is formed according to:

$$r_{n,S} = \sqrt{r_{i,S}^2 + \frac{n}{N_S}\left(r_{o,S}^2 - r_{i,S}^2\right)} \qquad (1)$$

$$\theta_{n,S} = 2\pi\varphi n \qquad (2)$$

$$x_{n,S} = r_{n,S}\cos(\theta_{n,S}) \qquad (3)$$

$$y_{n,S} = r_{n,S}\sin(\theta_{n,S}). \qquad (4)$$

Here, n is the number of a present sample point, where n runs from 1 to $N_s$, where $N_s$ is the number of sample points within the base area S, $r_{n,S}$ is the radius from the center 15 for sample point n, within the base area S, $r_{i,S}$ is the inner radius from the center 15 for the base area S, $r_{o,S}$ is the outer radius from the center 15 for the base area S, $N_s$ is the number of sample points within the base area S, $x_{n,S}$ is an x-coordinate within the base area S for sample point n, $y_{n,S}$ is a y-coordinate within the base area S for sample point n, $\theta_{n,S}$ is an angle between the radius to sample point n and the radius to the previous sample point n-1, and where

$$\varphi = \left(\frac{\sqrt{5}+1}{2} \pm W\right) \pm q \qquad (5)$$

where W is an integer including zero. According to some aspects, q is a natural number where -0,001<q<0,001. According to some aspects, q=0.

The term $\frac{\sqrt{5}+1}{2} \pm W$ , where W is an integer including zero, is according to some aspects known as the Golden Ratio, the Golden Section, the Golden Mean or the Divine Proportion.

In this manner, a uniformly distributed pattern of sample points 13; $13_A$, $13_B$ is acquired. For the example in Figure 4 where there is only one base area S, the inner radius $r_{i,S}$ equals zero.

For the example in Figure 3 and Figure 5 where there are two base areas $S_A$, $S_B$, the inner radius $r_{i,SA}$ for the first, outer, base area $S_A$ equals the outer radius $r_{o,SB}$ for the second, inner, base area $S_B$. Here, a number $N_{SB}$ of sample points $13_B$ within the second base area $S_B$ exceeds a number $N_{SA}$ of sample points $13_A$ within the first base area $S_A$.

According to some aspects, the first base area $S_A$ comprises the second base area $S_B$, such that the sample points $13_A$ within the first base area $S_A$ also are within the second base area $S_B$. This can for example be the case if the resulting number of sample points $13_A$ for the first base area $S_A$ that are positioned within the second base area $S_B$ is relatively small.

With reference to Figure 4 and Figure 7, the outer radius $r_{o,S}$ of a base area S is $r_{o,S} = d_S \tan\left(\frac{\psi_S}{2}\right)$ , where $\psi_S$ is the angle of view for a base area S and $d_S$ is a detection range of a base area S. The cone 10 that defines a driver's field of view can be defined by means of the detection range ds and the angle of view $\psi_S$. According to some aspects, the angle of view $\psi_S$ is about 4°. The sample point vector 14 can be expressed as:

$$\begin{bmatrix} x_{n,S} \\ y_{n,S} \\ d_S \end{bmatrix} \quad (6)$$

Given the distance of the detection range $d_s$, the angle $\psi_S$ of the field of view and the desired area per point or resolution $AP_S$, the minimum number $N_S$ of sample points 13 required can be calculated according to:

$$N_S = \left\lceil \frac{\pi d_S^2 \tan^2\left(\frac{\psi_S}{2}\right)}{AP_S} \right\rceil \quad (7).$$

For example, having the distance of the detection range $d_s$ = 100m, the angle of view $\psi_S$ = 4°, and the desired area per point or resolution $AP_S = 1\frac{m^2}{point}$ (roughly an area of a pedestrian), the minimum number $N_S$ of sample points 13 is

$$N_S = \left\lceil \frac{\pi\, 100^2 \tan^2\left(\frac{4}{2}\right)}{1} \right\rceil = 39 \text{ points}.$$

The above number of points is only valid for a single base area S with inner angle of view $\psi_{Si}$ = 0 degrees. A general formula for a base area $S_X$ with an inner angle of view $\psi_{i,SX}$ > 0 and outer angle of view $\psi_{o,SX}$ is:

$$N_{SX} = \left\lceil \frac{\pi\left(r_{o,SX}^2 - r_{i,SX}^2\right)}{AP_{SX}} \right\rceil = \left\lceil \frac{\pi d_{SX}^2 \left(\tan^2\left(\frac{\psi_{o,SX}}{2}\right) - \tan^2\left(\frac{\psi_{o,SX}}{2}\right)\right)}{AP_{SX}} \right\rceil \quad (8)$$

Equation (8) above is for example applicable for the scenario according to Figure 3, Figure 5 and Figure 6 where X can be A or B. For the first base area $S_A$ there is a first inner angle of view $\psi_{i,SA}$ and a first outer angle of view $\psi_{o,SA}$. For the second base area $S_B$ there is a second outer angle of view $\psi_{o,SB}$ that equals the first inner angle of view $\psi_{i,SA}$.

With reference to Figure 4 and Figure 5, in order to estimate to which extent a detected object 4 is occupying a driver's field of view 10 this can according to some aspects be calculated.

Having $p_S$ that is the number of samples points for a detected object 4 in a certain base area S, and $N_S$ is the total number of samples points a certain base area S, an object fraction coverage $F_S$ of the base area S can be expressed as:

$$F_S = \frac{p_S}{N_S} \quad . \quad (9)$$

For a single base area S, the above expression for F is identical to the total coverage C.

For the two base areas $S_A$, $S_B$ in Figure 5, a total object coverage C in multiple non-overlapping base areas can be expressed as:

$$C = \frac{F_A S_A + F_B S_B}{S_A + S_B}. \quad (10)$$

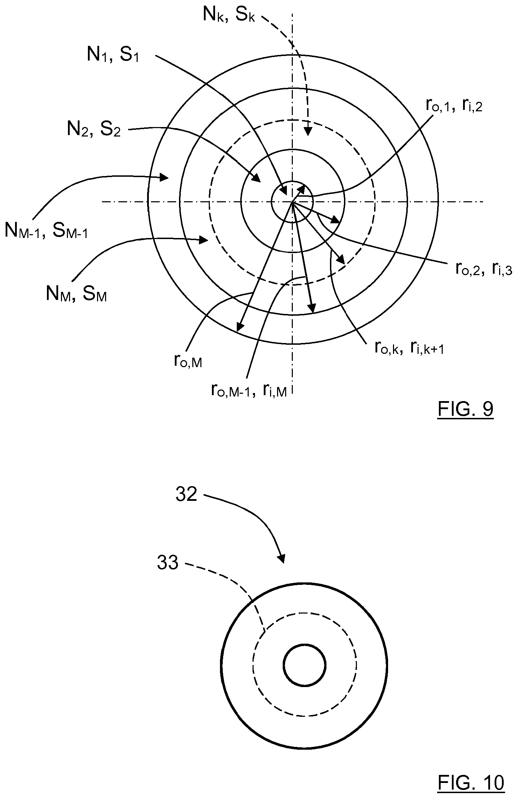

With reference to Figure 9, there is an arbitrary number M of base areas $S_1$ ... $S_M$, 1<k<M. It is to be noted that the base areas and associated parameters as described previously with reference to Figure 3, Figure 5 and Figure 6 were distinguished by subscripts in the form of letters such as A and B, and here, with reference to Figure 9, the base areas and associated parameters are distinguished by subscripts in the form of numbers. Here, a total object coverage C can be expressed as:

$$C = \frac{\sum_{k=1}^{M} F_k S_k}{\sum_{k=1}^{M} S_k} \qquad (11)$$

When neighboring segments share radii, a cumulative object coverage $C_M$ can be calculated, comprising a plurality of corresponding coverages $C_k$, $1<k<M$.

$$r_{i,k} = r_{o,k-1} \qquad (12)$$

$$S_k = \pi\left(r_{o,k}^2 - r_{i,k}^2\right) = \pi\left(r_{o,k}^2 - r_{o,k-1}^2\right) \qquad (13)$$

$$C_1 = F_1 \qquad (14)$$

$$C_2 = \frac{C_1\left(r_{o,1}^2 - r_{i,1}^2\right) + F_2\left(r_{0,2}^2 - r_{o,1}^2\right)}{r_{o,2}^2 - r_{i,1}^2} \qquad (15)$$

$$C_3 = \frac{C_2\left(r_{o,2}^2 - r_{i,1}^2\right) + F_3\left(r_{o,3}^2 - r_{o,2}^2\right)}{r_{o,3}^2 - r_{i,1}^2} \qquad (16)$$

$$C_M = \frac{C_{M-1}\left(r_{o,M-1}^2 - r_{i,1}^2\right) + F_M\left(r_{o,M}^2 - r_{o,M-1}^2\right)}{r_{o,M-1}^2 - r_{i,1}^2} \qquad (17)$$

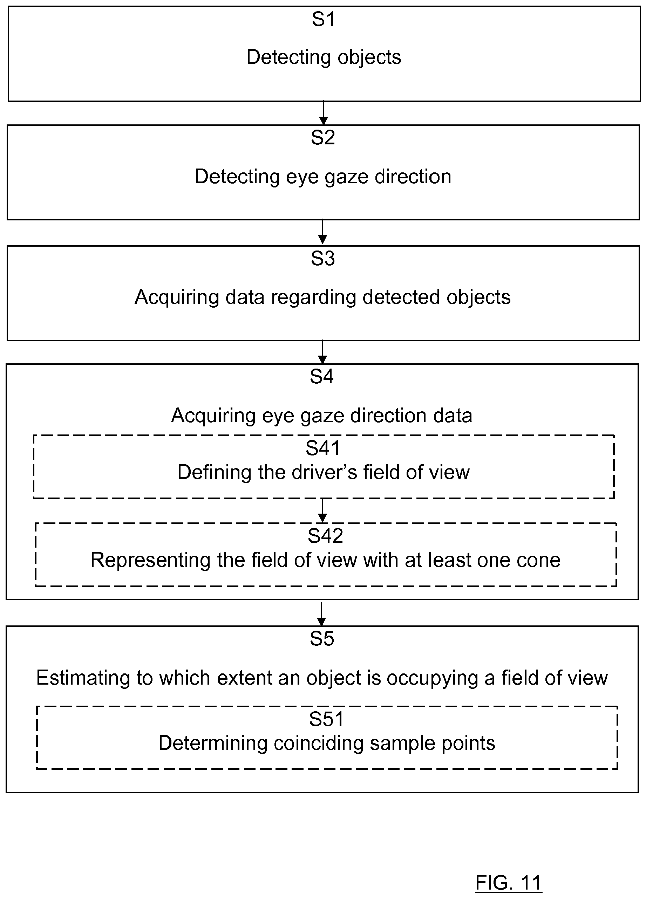

With reference to Figure 11, the present disclosure also relates to a method for a vehicle detection system 1, where the method comprises detecting S1 objects 4, 5, 6 outside a vehicle 7, detecting S2 eye gaze direction for a driver 9, acquiring S3 data regarding detected objects, and acquiring S4 eye gaze direction data. The eye gaze direction data comprises an eye gaze direction vector **v.**

The method further comprises estimating S5 to which extent a detected object 4 is occupying a driver's field of view 10 using a combination of the acquired data.

According to some aspects, the method comprises defining S41 the driver's field of view 10 by means of the acquired eye gaze direction data, and representing S42 the field of view 10 with at least one cone 10 having a corresponding base 11.

According to some aspects, the base 11 comprises a pattern of sample points 13; $13_A$, $13_B$, where the sample points 13; $13_A$, $13_B$ represent the effective field of view.

According to some aspects, the method comprises estimating to which extent a detected object 4 is occupying a driver's field of view 10 by determining S51 how many sample points 13 that coincide with the detected object 4.

According to some aspects, there are at least two field of views 10A, 10B with a corresponding base 26, 27 and base area $S_A$, $S_B$, where each base area $S_A$, $S_B$ comprises a corresponding sub-pattern of sample points $13_A$, $13_B$, where at least two sub-patterns of sample points $13_A$, $13_B$ have mutually different pattern density.

According to some aspects, each sample point 12 is related to a sample point vector 14 that runs in relation to the eye gaze direction vector **v.**

According to some aspects, each field of view 10; $10_A$, $10_B$ is represented by a cone having a circular base area S; $S_A$, $S_B$ with a center 15, where a pattern or sub-pattern of sample points 13; $13_A$, $13_B$ within each base area S; $S_A$, $S_B$ is formed according to

$$r_{n,S} = \sqrt{r_{i,S}^2 + \frac{n}{N_S}\left(r_{o,S}^2 - r_{i,S}^2\right)} \qquad 1$$

$$\theta_{n,S} = 2\pi\varphi n \qquad 2$$

$$x_{n,S} = r_{n,S} \cos \theta_{n,S} \qquad\qquad 3$$

$$y_{n,S} = r_{n,S} \sin(\theta_{n,S}), \qquad\qquad 4$$

where n is the number of the present sample point, where n runs from 1 to $N_s$ that is the number of sample points within the base area S, $r_{n,S}$ is the radius from the center for sample point n, within the base area S, $r_{i,S}$ is the inner radius from the center for the base area S, $r_{o,S}$ is the outer radius from the center for the base area S, $N_s$ is the number of sample points within the base area S, $x_{n,S}$ is an x-coordinate within the base area S for sample point n, $y_{n,S}$ is a y-coordinate within the base area S for sample point n, $\theta_{n,S}$ is an angle between the radius to sample point n and the radius to the previous sample point n-1, and where

$$\varphi = \left(\frac{\sqrt{5}+1}{2} \pm W\right) \pm q \qquad\qquad 5$$

where W is an integer including zero and -0,001<q<0,001.

Figure 8 schematically illustrates, in terms of a number of functional units, the components of the vehicle detection system 1 that comprises the control unit 2 according to an embodiment. Processing circuitry 28 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 29. The processing circuitry 28 may further be provided as at least one application specific integrated circuit (ASIC), or field programmable gate array (FPGA).

Particularly, the processing circuitry 28 is configured to cause the control unit 2 to perform a set of operations, or steps. These operations, or steps, were discussed above in connection to Figure 11. For example, the storage medium 29 may store the set of operations, and the processing circuitry 28 may be configured to retrieve the set of operations from the storage medium 29 to cause the environment detection system 3, the driver attentiveness detection system 8 and/or one or more systems 31 for safety and assisted driving to perform the set of operations. The set of operations may be provided as a set of executable instructions. Thus, the processing circuitry 28 is thereby arranged to execute methods as herein disclosed.

The storage medium 29 may also comprise persistent storage, which, for example, can be any single one or combination of magnetic memory, optical memory, solid state memory or even remotely mounted memory.

The control unit 2 may further comprise a communications interface 30 for communications with the environment detection system 3, the driver attentiveness detection system 8 and/or one or more systems 31 for safety and assisted driving.

Figure 10 shows a computer program product 32 comprising computer executable instructions 33 to execute any of the methods disclosed herein.

The embodiments of the present invention are not limited to the above, but may vary freely within the scope of the appended claims. For example, a base area S, $S_A$, $S_B$ can have any suitable shape, such as oval or polygonal, where the cone has a corresponding shape.

The control unit 2 might be comprised by one or several units, and may also at least partly be comprised in another unit such as a vehicle restraint control unit. The image control unit 21 may be comprised in the control unit 2.

The signal processing and estimations are carried out by means of suitable processing algorithm, such algorithms are well-known and details of these will not be discussed further.

According to some aspects, the storage medium 29 comprises a model of the vehicle 7. This enables the control unit 2 to determine if the eye gaze direction vector v is directed towards an obscuring object comprised in the vehicle 7, such as for example an A-pillar.

According to some aspects, in accordance with the present invention, one or more external sensors comprised in the environment detection system 3 capture an image of the surrounding environment. The image can be formed by pixels, as in the case of camera detector device 23, where the pixels are formed by pixel coordinates that have to be converted to a coordinate system relative to the vehicle, a vehicle coordinate system. The image can also be formed by a point cloud in the case of a Lidar detector device 25 and by reflected energy returns in the case of a radar detector device 24.

The control unit 2 is adapted to perform object detection for the image and to place the detected objects in the vehicle coordinate system. According to some aspects, the control unit 2 is adapted to perform object classification to determine what the objects are.

According to some aspects, the image control unit 21 is adapted to determine the eye gaze direction vector **v,** and the eye gaze direction vector **v** is mapped to the vehicle coordinate system.

According to some aspects, the control unit 2 is adapted to place the detected objects into a virtual 3D world along with the drivers gaze, following the eye gaze direction vector **v.**

According to some aspects, the control unit 2 is adapted to center the pattern of sample points 12 around the eye gaze direction vector **v** and to form rays from the gaze origin through each sample point, along the corresponding sample point vectors 14, and returns the first, if any, detected object in the path of the ray, performing ray-casting.

According to some aspects, the control unit 2 is adapted to calculate the overlap of each known detected object of the field of view centered around the eye gaze direction vector **v** based on the number of positive sample points for each detected object. The acquired information is forwarded and/or used by functions that can use information regarding when and to which extent a detected object has been observed by the driver. This is for example the case for automated assistance systems such as automated driving systems and automated safety systems that can determine if a detected object has been observed by the driver and the driver can take a suitable action without any automated assistance or if a detected object has not been observed by the driver, requiring enhanced triggering of automated actions.

Generally, the present invention relates to a vehicle detection system 1 comprising a control unit 2, an environment detection system 3 that is adapted to detect objects 4, 5, 6; 17, 18 outside a vehicle 7, and a driver attentiveness detection system 8 that is adapted to detect eye gaze direction of a driver 9. The control unit 2 is adapted to acquire data regarding detected objects 4, 5, 6; 17, 18 from the environment detection system 3, and to acquire eye gaze direction data from the driver attentiveness detection system 8, the eye gaze direction data comprising an eye gaze direction vector **v.** The control unit 2 is adapted to estimate to which extent a detected object 4 is occupying a driver's field of view 10 by means of a combination of the acquired data.

According to some aspects, the control unit 2 is adapted to define the driver's field of view 10 by means of the acquired eye gaze direction data, and to represent the field of view 10 with at least one cone 10 having a corresponding base 11.

According to some aspects, the base 11 comprises a pattern of sample points 13; $13_A$, $13_B$, where the sample points 13; $13_A$, $13_B$ represent the effective field of view.

According to some aspects, the control unit 2 is adapted to estimate to which extent a detected object 4 is occupying a driver's field of view 10 by determining how many sample points 13 that coincide with the detected object 4.

According to some aspects, there are at least two field of views 10A, 10B with a corresponding base 26, 27 and base area $S_A$, $S_B$, where each base area $S_A$, $S_B$ comprises a corresponding sub-pattern of sample points $13_A$, $13_B$, where at least two sub-patterns of sample points $13_A$, $13_B$ have mutually different pattern density.

According to some aspects, each sample point 12 is related to a sample point vector 14 that runs in relation to the eye gaze direction vector **v.**

According to some aspects, each field of view 10; $10_A$, $10_B$ is represented by a cone having a circular base area S; $S_A$, $S_B$ with a center 15, where a pattern or sub-pattern of sample points 13; $13_A$, $13_B$ within each base area S; $S_A$, $S_B$ is formed according to

$$r_{n,S} = \sqrt{r_{i,S}^2 + \frac{n}{N_S}\left(r_{o,S}^2 - r_{i,S}^2\right)}$$

$$\theta_{n,S} = 2\pi\varphi n$$

$$x_{n,S} = r_{n,S}\cos\theta_{n,S}$$

$$y_{n,S} = r_{n,S}\sin(\theta_{n,S}),$$

where n is the number of the present sample point, where n runs from 1 to $N_s$ that is the number of sample points within the base area S, $r_{n,S}$ is the radius from the center for sample point n, within the base area S, $r_{i,S}$ is the inner radius from the center for the base area S, $r_{o,S}$ is the outer radius from the center for the base area S, $N_s$ is the number of sample points within the base area S, $x_{n,S}$ is an x-coordinate within the base area S for sample point n, $y_{n,S}$ is a y-coordinate within the base area S for sample point n, $\theta_{n,S}$ is an angle between the radius to sample point n and the radius to the previous sample point n-1, and where

$$\varphi = \left(\frac{\sqrt{5}+1}{2} \pm W\right) \pm q$$

where W is an integer including zero and -0,001<q<0,001.

Generally, the present invention also relates to a vehicle 7 comprising the vehicle detection system 1 according to the above

**Claims**

1. A vehicle detection system (1) comprising a control unit (2), an environment detection system (3) that is adapted to detect objects (4, 5, 6; 17, 18) outside a vehicle (7), and a driver attentiveness detection system (8) that is adapted to detect eye gaze direction of a driver (9), where the control unit (2) is adapted to acquire data regarding detected objects (4, 5, 6; 17, 18) from the environment detection system (3), and to acquire eye gaze direction data from the driver attentiveness detection system (8), the eye gaze direction data comprising an eye gaze direction vector ($\mathbf{v}$), where the control unit (2) is adapted to estimate to which extent a detected object (4) is occupying a driver's field of view (10) by means of a combination of the acquired data, where the control unit (2) is adapted to define the driver's field of view (10) by means of the acquired eye gaze direction data, and to represent the field of view (10) with at least one cone (10) having a corresponding base (11), **characterized in that** the base (11) comprises a pattern of sample points (13; $13_A$, $13_B$), where the sample points (13; $13_A$, $13_B$) represent the effective field of view, where the control unit (2) is adapted to estimate to which extent a detected object (4) is occupying a driver's field of view (10) by determining how many sample points (13) that coincide with the detected object (4), wherein there are at least two field of views (10A, 10B) with a corresponding base (26, 27) and base area ($S_A$, $S_B$), where each base area ($S_A$, $S_B$) comprises a corresponding sub-pattern of sample points ($13_A$, $13_B$), where at least two sub-patterns of sample points ($13_A$, $13_B$) have mutually different pattern density, where a more remote base area ($S_B$) has a denser sub-pattern of sample points ($13_B$) than a less remote base area ($S_A$).

2. The vehicle detection system according to claim 1, wherein each sample point (12) is related to a sample point vector (14) that runs in relation to the eye gaze direction vector ($\mathbf{v}$).

3. The vehicle detection system according to any one of the claims 1 or 2, wherein each field of view (10; $10_A$, $10_B$) is represented by a cone having a circular base area (S; $S_A$, $S_B$) with a center (15), where a pattern or sub-pattern of sample points (13; $13_A$, $13_B$) within each base area (S; $S_A$, $S_B$) is formed according to

$$r_{n,S} = \sqrt{r_{i,S}^2 + \frac{n}{N_S}\left(r_{o,S}^2 - r_{i,S}^2\right)}$$

$$\theta_{n,S} = 2\pi\varphi n$$

$$x_{n,S} = r_{n,S}\cos(\theta_{n,S})$$

$$y_{n,S} = r_{n,S}\sin(\theta_{n,S}),$$

where n is the number of the present sample point, where n runs from 1 to $N_s$ that is the number of sample points within the base area S, $r_{n,S}$ is the radius from the center for sample point n, within the base area S, $r_{i,S}$ is the inner radius from the center for the base area S, $r_{o,S}$ is the outer radius from the center for the base area S, $N_s$ is the number of sample points within the base area S, $x_{n,S}$ is an x-coordinate within the base area S for sample point n, $y_{n,S}$ is a y-coordinate within the base area S for sample point n, $\theta_{n,S}$ is an angle between the radius to sample point n and the radius to the previous sample point n-1, and where

$$\varphi = \left(\frac{\sqrt{5}+1}{2} \pm W\right) \pm q$$

where W is an integer including zero and -0,001<q<0,001.

4. A vehicle (7) comprising the vehicle detection system 1) according to any one of the claims 1-3.

5. A method for a vehicle detection system (1), where the method comprises:

   detecting (S1) objects (4, 5, 6) outside a vehicle (7) ;
   detecting (S2) eye gaze direction for a driver (9);
   acquiring (S3) data regarding detected objects;
   acquiring (S4) eye gaze direction data, the eye gaze direction data comprising an eye gaze direction vector (v);
   estimating (S5) to which extent a detected object (4) is occupying a driver's field of view (10) using a combination of the acquired data.
   defining (S41) the driver's field of view (10) by means of the acquired eye gaze direction data, and
   representing (S42) the field of view (10) with at least one cone (10) having a corresponding base (11), **characterized in that**

   the base (11) comprises a pattern of sample points (13; $13_A$, $13_B$), where the sample points (13; $13_A$, $13_B$) represent the effective field of view, where the method comprises estimating to which extent a detected object (4) is occupying a driver's field of view (10) by:
   determining (S51) how many sample points (13) that coincide with the detected object (4), where there are at least two field of views (10A, 10B) with a corresponding base (26, 27) and base area ($S_A$, $S_B$), where each base area ($S_A$, $S_B$) comprises a corresponding sub-pattern of sample points ($13_A$, $13_B$), where at least two sub-patterns of sample points ($13_A$, $13_B$) have mutually different pattern density, where a more remote base area ($S_B$) has a denser sub-pattern of sample points ($13_B$) than a less remote base area ($S_A$).

6. The method according to claim 5, wherein each sample point (12) is related to a sample point vector (14) that runs in relation to the eye gaze direction vector (**v**).

7. The method according to any one of the claims 5 or 6, wherein each field of view (10; $10_A$, $10_B$) is represented by a cone having a circular base area (S; $S_A$, $S_B$) with a center (15), where a pattern or sub-pattern of sample points (13; $13_A$, $13_B$) within each base area (S; $S_A$, $S_B$) is formed according to

$$r_{n,S} = \sqrt{r_{i,S}^2 + \frac{n}{N_S}\left(r_{o,S}^2 - r_{i,S}^2\right)} \qquad (1)$$

$$\theta_{n,S} = 2\pi\varphi n \qquad (2)$$

$$x_{n,S} = r_{n,S}\cos(\theta_{n,S}) \qquad (3)$$

$$y_{n,S} = r_{n,S}\sin(\theta_{n,S}), \qquad (4)$$

where n is the number of the present sample point, where n runs from 1 to $N_s$ that is the number of sample points within the base area S, $r_{n,S}$ is the radius from the center for sample point n, within the base area S, $r_{i,S}$ is the inner radius from the center for the base area S, $r_{o,S}$ is the outer radius from the center for the base area S, $N_s$ is the number of sample points within the base area S, $x_{n,S}$ is an x-coordinate within the base area S for sample point n, $y_{n,S}$ is a y-coordinate within the base area S for sample point n, $\theta_{n,S}$ is an angle between the radius to sample point n and the radius to the previous sample point n-1, and where

$$\varphi = \left(\frac{\sqrt{5}+1}{2} \pm W\right) \pm q \qquad (5)$$

where W is an integer including zero and -0,001<q<0,001.

**Patentansprüche**

1. Fahrzeugerkennungssystem (1), umfassend eine Steuereinheit (2), ein Umgebungserkennungssystem (3), das zum Erkennen von Objekten (4, 5, 6; 17, 18) außerhalb eines Fahrzeugs (7) ausgelegt ist, und ein System zur Erkennung der Fahreraufmerksamkeit (8), das zum Erkennen einer Blickrichtung eines Fahrers (9) ausgelegt ist, wobei die Steuereinheit (2) zum Erfassen von Daten hinsichtlich erkannter Objekte (4, 5, 6; 17, 18) vom Umgebungserkennungssystem (3) und zum Erfassen von Blickrichtungsdaten vom System zur Erkennung der Fahreraufmerksamkeit (8) ausgelegt ist, wobei die Blickrichtungsdaten einen Blickrichtungsvektor (v) umfassen, wobei die Steuereinheit (2) zum Schätzen, inwieweit ein erkanntes Objekt (4) das Sichtfeld (10) des Fahrers einnimmt, mittels einer Kombination der erfassten Daten ausgelegt ist, wobei die Steuerung (2) zum Definieren des Sichtfelds (10) des Fahrers mittels der erfassten Blickrichtungsdaten und zum Darstellen des Sichtfelds (10) mit mindestens einem Kegel (10) mit einer entsprechenden Basis (11) ausgelegt ist, **dadurch gekennzeichnet, dass** die Basis (11) ein Muster von Abtastpunkten (13; $13_A$, $13_B$) umfasst, wobei die Abtastpunkte (13; $13_A$, $13_B$) das effektive Sichtfeld darstellen, wobei die Steuereinheit (2) so ausgelegt ist, dass sie schätzt, inwieweit ein erkanntes Objekt (4) ein Sichtfeld (10) des Fahrers einnimmt, indem sie bestimmt, wie viele Abtastpunkte (13) mit dem erkannten Objekt (4) übereinstimmen, wobei es mindestens zwei Sichtfelder (10A, 10B) mit einer entsprechenden Basis (26, 27) und einer Basisfläche ($S_A$, $S_B$) gibt, wobei jede Basisfläche (SA, SB) ein entsprechendes Teilmuster von Abtastpunkten ($13_A$, $13_B$) umfasst, wobei mindestens zwei Teilmuster (13A, 13B) eine voneinander verschiedene Musterdichte aufweisen, wobei eine weiter entfernte Basisfläche ($S_B$) ein dichteres Teilmuster von Abtastpunkten ($13_B$) als eine weniger weit entfernte Basisfläche ($S_A$) aufweist.

2. Fahrzeugerkennungssystem nach Anspruch 1, wobei jeder Abtastpunkt (12) einem Abtastpunktvektor (14) entspricht, der in Beziehung zum Blickrichtungsvektor (v) verläuft.

3. Fahrzeugerkennungssystem nach einem der Ansprüche 1 oder 2, wobei jedes Sichtfeld (10; $10_A$, $10_B$) durch einen Kegel mit einer kreisförmigen Basisfläche (S; $S_A$, $S_B$) mit einem Mittelpunkt (15) dargestellt wird, wobei ein Muster oder Teilmuster von Abtastpunkten (13; $13_A$, $13_B$) innerhalb jeder Basisfläche (S; $S_A$, $S_B$) gebildet wird gemäß

$$r_{n,s} = \sqrt{r_{i,s}^2 + \frac{n}{N_c}\left(r_{o,s}^2 - r_{i,s}^2\right)}$$

$$\theta_{n,s} = 2\pi\varphi n$$

$$x_{n,s} = r_{n,s}\cos\left(\theta_{n,s}\right)$$

$$y_{n,s} = r_{n,s}\sin\left(\theta_{n,s}\right),$$

wobei n die Nummer des gegenwärtigen Abtastpunkts ist, wobei n von 1 bis $N_s$ reicht, das die Anzahl von Abtastpunkten innerhalb der Basisfläche S ist, $r_{n,s}$ der Radius vom Mittelpunkt für Abtastpunkt n innerhalb der Basisfläche S ist, $r_{i,s}$ der Innenradius vom Mittelpunkt für die Basisfläche S ist, $r_{o,s}$ der Außenradius vom Mittelpunkt für die Basisfläche S ist, $N_s$ die Anzahl von Abtastpunkten innerhalb der Basisfläche S ist, $x_{n,s}$ eine x-Koordinate innerhalb der Basisfläche S für Abtastpunkt n ist, $y_{n,s}$ eine y-Koordinate innerhalb der Basisfläche S für Abtastpunkt n ist, $\theta_{n,s}$ ein Winkel zwischen dem Radius zu Abtastpunkt n und dem Radius zum vorherigen Abtastpunkt n - 1 ist, und wobei

$$\varphi = \left(\frac{\sqrt{5}+1}{2} \pm W\right) \pm q$$

wobei W eine ganze Zahl, einschließlich null, ist und -0,001 < q < 0,001 ist.

4. Fahrzeug (7), umfassend das Fahrzeugerkennungssystem (1) nach einem der Ansprüche 1 bis 3.

5. Verfahren für ein Fahrzeugerkennungssystem (1), wobei das Verfahren umfasst:

Erkennen (S1) von Objekten (4, 5, 6) außerhalb eines Fahrzeugs (7);

Erkennen (S2) einer Blickrichtung für einen Fahrer (9) ;

Erfassen (S3) von Daten hinsichtlich erkannter Objekte;

Erfassen (S4) von Blickrichtungsdaten, wobei die Blickrichtungsdaten einen Blickrichtungsvektor (v) umfassen;

Schätzen (S5), inwieweit ein erkanntes Objekt (4) das Sichtfeld (10) des Fahrers einnimmt, unter Verwendung einer Kombination der erfassten Daten;

Definieren (S41) des Sichtfelds (10) des Fahrers mittels der erfassten Blickrichtungsdaten und

Darstellen (S42) des Sichtfelds (10) mit mindestens einem Kegel (10) mit einer entsprechenden Basis (11),

**dadurch gekennzeichnet, dass**

die Basis (11) ein Muster von Abtastpunkten(13; 13$_A$, 13$_B$) umfasst, wobei die Abtastpunkte (13; 13$_A$, 13$_B$) das effektive Sichtfeld darstellen, wobei das Verfahren ein Schätzen umfasst, inwieweit ein erkanntes Objekt (4) ein Sichtfeld (10) des Fahrers einnimmt, durch:

Bestimmen (S51), wie viele Abtastpunkte (13) mit dem erkannten Objekt (4) übereinstimmen, wobei es mindestens zwei Sichtfelder (10A, 10B) mit einer entsprechenden Basis (26, 27) und einer Basisfläche (S$_A$, S$_B$) gibt, wobei jede Basisfläche (S$_A$, S$_B$) ein entsprechendes Teilmuster von Abtastpunkten (13$_A$, 13$_B$) umfasst, wobei mindestens zwei Teilmuster (13$_A$, 13$_B$) eine voneinander verschiedene Musterdichte aufweisen, wobei eine weiter entfernte Basisfläche (S$_B$) ein dichteres Teilmuster von Abtastpunkten (13$_B$) als eine weniger weit entfernte Basisfläche (S$_A$) aufweist.

6. Verfahren nach Anspruch 5, wobei jeder Abtastpunkt (12) einem Abtastpunktvektor (14) entspricht, der in Beziehung zum Blickrichtungsvektor (v) verläuft.

7. Verfahren nach einem der Ansprüche 5 oder 6, wobei jedes Sichtfeld (10; 10$_A$, 10$_B$) durch einen Kegel mit einer kreisförmigen Basisfläche (S; S$_A$, S$_B$) mit einem Mittelpunkt (15) dargestellt wird, wobei ein Muster oder Teilmuster von Abtastpunkten (13; 13$_A$, 13$_B$) innerhalb jeder Basisfläche (S; S$_A$, S$_B$) gebildet wird gemäß

$$r_{n,S} = \sqrt{r_{i,S}^2 + \frac{n}{N_S}\left(r_{o,S}^2 - r_{i,S}^2\right)} \qquad (1)$$

$$\theta_{n,S} = 2\pi\varphi n \qquad (2)$$

$$x_{n,S} = r_{n,S}\cos(\theta_{n,S}) \qquad (3)$$

$$y_{n,S} = r_{n,S}\sin(\theta_{n,S}), \qquad (4)$$

wobei n die Nummer des gegenwärtigen Abtastpunkts ist, wobei n von 1 bis N$_S$ reicht, das die Anzahl von Abtastpunkten innerhalb der Basisfläche S ist, r$_{n,s}$ der Radius vom Mittelpunkt für Abtastpunkt n innerhalb der Basisfläche S ist, r$_{i,s}$ der Innenradius vom Mittelpunkt für die Basisfläche S ist, r$_{o,s}$ der Außenradius vom Mittelpunkt für die Basisfläche S ist, N$_s$ die Anzahl von Abtastpunkten innerhalb der Basisfläche S ist, x$_{n,s}$ eine x-Koordinate innerhalb der Basisfläche S für Abtastpunkt n ist, y$_{n,s}$ eine y-Koordinate innerhalb der Basisfläche S für Abtastpunkt n ist, θ$_{n,s}$ ein Winkel zwischen dem Radius zu Abtastpunkt n und dem Radius zum vorherigen Abtastpunkt n-1 ist, und wobei

$$\varphi = \left(\frac{\sqrt{5}+1}{2} \pm W\right) \pm q \qquad (5)$$

wobei W eine ganze Zahl, einschließlich null, ist und -0,001 < q < 0,001 ist.

**Revendications**

1. Système de détection de véhicule (1) comprenant une unité de commande (2), un système de détection de l'environnement (3) adapté à la détection d'objets (4, 5, 6 ; 17, 18) à l'extérieur d'un véhicule (7), et un système de détection de l'attention du conducteur (8) adapté à la détection de la direction du regard d'un conducteur (9), l'unité de commande (2) étant adaptée pour acquérir des données concernant des objets détectés (4, 5, 6 ; 17, 18) à partir du système de détection de l'environnement (3) et à acquérir des données sur la direction du regard à partir du système de détection de l'attention du conducteur (8), les données sur la direction du regard comprenant un vecteur de direction du regard (v), l'unité de commande (2) étant adaptée pour estimer dans quelle mesure un objet détecté (4) occupe un champ de vision du conducteur (10) à l'aide d'une combinaison des données acquises, l'unité de commande (2) étant adaptée pour définir le champ de vision du conducteur (10) au moyen des données sur la direction du regard acquises, et pour représenter le champ de vision (10) avec au moins un cône (10) ayant une base correspondante (11), **caractérisé en ce que** la base (11) comprend un motif de points d'échantillonnage (13 ; $13_A$, $13_B$), les points d'échantillonnage (13 ; $13_A$, $13_B$) représentant le champ de vision effectif, l'unité de commande (2) étant adaptée pour estimer dans quelle mesure un objet détecté (4) occupe le champ de vision du conducteur (10) en déterminant le nombre de points d'échantillonnage (13) qui coïncident avec l'objet détecté (4), au moins deux champs de vision (10A, 10B) existant avec une base correspondante (26, 27) et une zone de base ($S_A$, $S_B$) correspondantes, chaque zone de base ($S_A$, $S_B$) comprenant un sous-motif correspondant de points d'échantillonnage ($13_A$, $13_B$), au moins deux sous-motifs de points d'échantillonnage ($13_A$, $13_B$) ayant une densité de motif mutuellement différente, une zone de base plus éloignée ($S_B$) ayant un sous-motif de points d'échantillonnage ($13_B$) plus dense qu'une zone de base moins éloignée ($S_A$).

2. Système de détection de véhicules selon la revendication 1, chaque point d'échantillonnage (12) étant lié à un vecteur de point d'échantillonnage (14) qui s'étend par rapport au vecteur de direction du regard (v).

3. Système de détection de véhicules selon l'une quelconque des revendications 1 ou 2, chaque champ de vision (10 ; 10A, 10B) étant représenté par un cône ayant une zone de base circulaire (S ; $S_A$, $S_B$) avec un centre (15), un motif ou un sous-motif de points d'échantillonnage (13 ; $13_A$, $13_B$) à l'intérieur de chaque zone de base (S ; $S_A$, $S_B$) étant formé selon

$$r_{n,S} = \sqrt{r_{i,S}^2 + \frac{n}{N_S}\left(r_{0,S}^2 - r_{i,S}^2\right)}$$

$$\theta_{n,S} = 2\pi\varphi n$$

$$x_{n,S} = r_{n,S}cos\left(\theta_{n,S}\right)$$

$$y_{n,S} = r_{n,S}sin\left(\theta_{n,S}\right),$$

n étant le numéro du point d'échantillonnage actuel, n allant de 1 à $N_S$ qui est le nombre de points d'échantillonnage dans la zone de base S, $r_{n,S}$ étant le rayon à partir du centre pour le point d'échantillonnage n, dans la zone de base S, $r_{i,S}$ étant le rayon intérieur à partir du centre pour la zone de base S, $r_{o,S}$ étant le rayon extérieur à partir du centre pour la zone de base S, $N_S$ étant le nombre de points d'échantillonnage dans la zone de base S, $x_{n,S}$ étant une coordonnée x dans la zone de base S pour le point d'échantillonnage n, $y_{n,S}$ étant une coordonnée y dans la zone de base S pour le point d'échantillonnage n, $\theta_{n,S}$ étant un angle entre le rayon au point d'échantillonnage n et le rayon au point d'échantillonnage précédent n-1, et

$$\varphi = \left(\frac{\sqrt{5}+1}{2} \pm W\right) \pm q$$

W étant un nombre entier comprenant zéro et -0,001 < q < 0,001.

4. Véhicule (7) comprenant le système de détection de véhicule (1) selon l'une quelconque des revendications 1 à 3.

5. Procédé pour un système de détection de véhicule (1), le procédé comprenant :

la détection (S1) d'objets (4, 5, 6) à l'extérieur d'un véhicule (7) ;

la détection (S2) de la direction du regard d'un conducteur (9) ;

l'acquisition (S3) de données concernant les objets détectés ;

l'acquisition (S4) de données sur la direction du regard, les données sur la direction du regard comprenant un vecteur de direction du regard (v) ;

l'estimation (S5) dans quelle mesure un objet détecté (4) occupe un champ de vision du conducteur (10) en utilisant une combinaison des données acquises,

la définition (S41) du champ de vision du conducteur (10) à l'aide des données sur la direction du regard acquises, et

la représentation (S42) du champ de vision (10) par au moins un cône (10) ayant une base correspondante (11), **caractérisé en ce que**

la base (11) comprend un motif de points d'échantillonnage (13 ; $13_A$, $13_B$), les points d'échantillonnage (13 ; $13_A$, $13_B$) représentant le champ de vision effectif, le procédé consistant à estimer dans quelle mesure un objet détecté (4) occupe le champ de vision du conducteur (10) en :

déterminant (S51) le nombre de points d'échantillonnage (13) qui coïncident avec l'objet détecté (4), lorsqu'il y a au moins deux champs de vision (10A, 10B) avec une base (26, 27) et une zone de base ($S_A$, $S_B$) correspondantes, chaque zone de base ($S_A$, $S_B$) comprenant un sous-motif correspondant de points d'échantillonnage ($13_A$, $13_B$), au moins deux sous-motifs de points d'échantillonnage ($13_A$, $13_B$) ayant une densité de motif mutuellement différente, une zone de base plus éloignée ($S_B$) ayant un sous-motif de points d'échantillonnage ($13_B$) plus dense qu'une zone de base moins éloignée ($S_A$).

6. Procédé selon la revendication 5, chaque point d'échantillonnage (12) étant lié à un vecteur de point d'échantillonnage (14) qui s'étend par rapport au vecteur de direction du regard (v).

7. Procédé selon l'une quelconque des revendications 5 ou 6, chaque champ de vision (10 ; $10_A$, $10_B$) étant représenté par un cône ayant une zone de base circulaire (S ; $S_A$, $S_B$) avec un centre (15), un motif ou un sous-motif de points d'échantillonnage (13 ; $13_A$, $13_B$) à l'intérieur de chaque zone de base (S ; $S_A$, $S_B$) étant formé selon

$$r_{n,S} = \sqrt{r_{i,S}^2 + \frac{n}{N_S}\left(r_{0,S}^2 - r_{i,S}^2\right)} \qquad (1)$$

$$\theta_{n,S} = 2\pi\varphi n \qquad (2)$$

$$x_{n,S} = r_{n,S}\cos\left(\theta_{n,S}\right) \qquad (3)$$

$$y_{n,S} = r_{n,S}\sin\left(\theta_{n,S}\right) \qquad (4)$$

n étant le numéro du point d'échantillonnage actuel, n allant de 1 à $N_S$ qui est le nombre de points d'échantillonnage dans la zone de base S, $r_{n,S}$ étant le rayon à partir du centre pour le point d'échantillonnage n, dans la zone de base S, $r_{i,S}$ étant le rayon intérieur à partir du centre pour la zone de base S, $r_{0,S}$ étant le rayon extérieur à partir du centre pour la zone de base S, $N_S$ étant le nombre de points d'échantillonnage dans la zone de base S, $x_{n,S}$ étant une coordonnée x dans la zone de base S pour le point d'échantillonnage n, $y_{n,S}$ étant une coordonnée y dans la zone de base S pour le point d'échantillonnage n, $\theta_{n,S}$ étant un angle entre le rayon au point d'échantillonnage n et le rayon au point d'échantillonnage précédent n-1, et

$$\varphi = \left(\frac{\sqrt{5}+1}{2} \pm W\right) \pm q$$

W étant un nombre entier comprenant zéro et -0,001<q<0,001.

FIG. 1

FIG. 2

$S_B$

$S_A$

11

$r_{i,SA}$ $r_{o,SB}$

$r_{o,SA}$

15

FIG. 3

11

S

$r_{o,S}$

4

13

FIG. 4

FIG. 5

FIG. 6

$d_s$

$r_{o,s}$

11

S

9a

$\psi_s$

v

22

14

10

12

FIG. 7

3

2

8

23

28

20

24

29

21

1

25

30

31

FIG. 8

$N_k, S_k$

$N_1, S_1$

$N_2, S_2$

$r_{o,1}, r_{i,2}$

$N_{M-1}, S_{M-1}$

$N_M, S_M$

$r_{o,2}, r_{i,3}$

$r_{o,M}$

$r_{o,k}, r_{i,k+1}$

$r_{o,M-1}, r_{i,M}$

FIG. 9

32

33

FIG. 10

```
┌─────────────────────────────────────────────────────────┐
│                          S1                             │
│                   Detecting objects                     │
└─────────────────────────────────────────────────────────┘
                            │
                            ▼
┌─────────────────────────────────────────────────────────┐
│                          S2                             │
│               Detecting eye gaze direction              │
└─────────────────────────────────────────────────────────┘
                            │
                            ▼
┌─────────────────────────────────────────────────────────┐
│                          S3                             │
│         Acquiring data regarding detected objects       │
└─────────────────────────────────────────────────────────┘
                            │
                            ▼
┌─────────────────────────────────────────────────────────┐
│                          S4                             │
│              Acquiring eye gaze direction data          │
│  ┌ ─ ─ ─ ─ ─ ─ ─ ─ ─ ─ ─ ─ ─ ─ ─ ─ ─ ─ ─ ─ ─ ─ ─ ─ ┐  │
│                          S41                            │
│  │          Defining the driver's field of view      │  │
│  └ ─ ─ ─ ─ ─ ─ ─ ─ ─ ─ ─ ─ ─ ─ ─ ─ ─ ─ ─ ─ ─ ─ ─ ─ ┘  │
│                            │                            │
│                            ▼                            │
│  ┌ ─ ─ ─ ─ ─ ─ ─ ─ ─ ─ ─ ─ ─ ─ ─ ─ ─ ─ ─ ─ ─ ─ ─ ─ ┐  │
│                          S42                            │
│  │   Representing the field of view with at least one │  │
│                         cone                            │
│  └ ─ ─ ─ ─ ─ ─ ─ ─ ─ ─ ─ ─ ─ ─ ─ ─ ─ ─ ─ ─ ─ ─ ─ ─ ┘  │
└─────────────────────────────────────────────────────────┘
                            │
                            ▼
┌─────────────────────────────────────────────────────────┐
│                          S5                             │
│  Estimating to which extent an object is occupying a    │
│                    field of view                        │
│  ┌ ─ ─ ─ ─ ─ ─ ─ ─ ─ ─ ─ ─ ─ ─ ─ ─ ─ ─ ─ ─ ─ ─ ─ ─ ┐  │
│                          S51                            │
│  │        Determining coinciding sample points        │  │
│  └ ─ ─ ─ ─ ─ ─ ─ ─ ─ ─ ─ ─ ─ ─ ─ ─ ─ ─ ─ ─ ─ ─ ─ ─ ┘  │
└─────────────────────────────────────────────────────────┘
```

FIG. 11

# EP 3 828 755 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SE 1530037

### Non-patent literature cited in the description

- **L. FLETCHER.** *Driver Inattention Detection based on Eye GazeRoad Event Correlation*
- **LANGNER TOBIAS.** *Traffic awareness driver assistance based on stereovision, eye-tracking, and head-up display*